# EUROPEAN PATENT APPLICATION

(11) **EP 1 505 831 A2**
(43) Date of publication of application: **09.02.2005**
(21) Application number: 04017193.6
(22) Date of filing: 21.07.2004
(51) Int. Cl.: H04N 5/76

(54) **Information recording apparatus, information recording method, and information recording medium on which the information recording program is recorded**

(30) Priority: 29.07.2003 JP 2003203367
(71) Applicant: Pioneer Corporation, Meguro-ku, Tokyo (JP)
(72) Inventor: Hora, Takashi, 2610 Hanazono 4-chome Tokorozawa-shi (JP)
(74) Representative: Grünecker, Kinkeldey, Stockmair & Schwanhäusser Anwaltssozietät

(57) **Abstract**

An information-recording apparatus (R) is provided with: an encoding device (2) which obtains recording information from the outside to be recorded onto a recording medium (4a), and encoding said obtained information to correspond to the recording format of said recording information after being recording onto said recording medium (4a); a recording device (3) which temporarily records said encoded recording information onto a temporary recording medium (3a) that is different from said recording medium (4a); and a transfer/recording device which transfers and records said recording information that is recorded on said temporary recording medium (3a) onto said recording medium (4a) while maintaining at least the information amount of said recording information.

## Description

### BACKGROUND OF THE INVENTION

### 1.Field of the Invention:

This invention relates to a information-recording apparatus, information-recording method, information-recording program and information-recording medium on which the information-recording program is recorded, and more particularly, to a information-recording apparatus and information-recording method of recording a television broadcast program that was obtained by way of a broadcast signal onto a recording medium such as an optical disc or hard disc, and to a information-recording program for recording that information and the information-recording medium on which the information-recording program is recorded.

### 2.Related Art:

Conventionally, information, such as a broadcast program, has been recorded on an optical disc or the like that is mounted in a so-called recorder.

Here, in this conventional recorder, a function, called a just-recording function, has been disclosed in which when it is clear beforehand how much the recording capacity of the unrecorded area on the optical disc (in other words, the recordable capacity on the optical disc) on which the received information will be recorded is, it encodes the received information such that the amount of information becomes less than this recordable capacity, and then records the information onto the optical disc. This function is described in more detail in reference patent document (see. Japanese Patent No. H6-76474).

However, in this kind of conventional recorder, when the optical disc or recording medium is not inserted into the recorder, it is not possible to determine the recordable capacity on that optical disc, and as a result, it is not possible to encode the information and execute the recording process itself.

Therefore, to solve this problem, after the received information was recorded temporarily onto a separate recording medium at the received timing, so-called dubbing was performed to record it again onto the desired optical disc. In the case of performing this kind of dubbing, construction was such that the received information was recorded onto a separate recording medium, and then later, that information was read and decoded, and in order that the information was less than the recordable capacity of the optical disc onto which it was desired to finally be recorded, the information was encoded again and then recorded onto the optical disc.

However, in a prior recorder having the kind of construction described above, even though the information was dubbed onto the intended optical disc after being recorded temporarily onto a separate recording medium, since the information that was temporarily recorded on the separate recording medium was decoded and then encoded again, there was a problem in that the time required for encoding the information again was extremely long.

Moreover, normally, even though the information is recording temporarily onto a separate recording medium, recording is performed after encoding the information to correspond with that separate recordingmedium, so as a result, there was a problem in that there was a possibility of degradation of the audio or video quality of the received information due to being encoded twice.

### SUMMARY OF THE INVENTION

Taking the problems described above into consideration, it is the object of the present invention to provide a information-recording apparatus, information-recording method, information-recording program and information-recording medium on which the information-recording program is recorded that make it possible to receive and record broadcast information without losing the timing, even when it is not possible to prepare the optical disc onto which the information is finally intended to be recorded, and that make it possible to shorten the dubbing time and record the received information onto the optical disc without degradation of the audio or video quality even though the optical disc onto which the information is finally intended to be recorded is not prepared.

The above object of the present invention can be achieved by an information-recording apparatus of the present invention. The information-recording apparatus is provided with: an encoding device which obtains recording information from the outside to be recorded onto a recording medium, and encoding the obtained information to correspond to the recording format of the recording information after being recording onto the recording medium; a recording device which temporarily records the encoded recording information onto a temporary recording medium that is different from the recording medium; and a transfer/recording device which transfers and records the recording information that is recorded on the temporary recording medium onto the recording medium while maintaining at least the information amount of the recording information.

According to the present invention, in the recording process of a recorder, an encoder unit performs encoding using an encoding rate that corresponds to a recording format such as a recording capacity after recording onto the recording medium, and after a program is temporarily recorded onto a hard disc, it is transferred and recorded as is onto the recording medium, so it is possible to prevent long transfer time and degradation of the video quality due to performing encoding and decoding again when transferring the program.

In one aspect of the present invention can be achieved by the information-recording apparatus of the present invention. The information-recording apparatus of the present invention is further provided with: an obtaining device which obtains at least the recording time or information amount of the obtained recording information before encoding; and a detection device which detects the recordable capacity on the recording medium; and wherein the encoding device encodes the obtained recording information based on at least the recording time or information amount of the obtained recording information, and the detected recordable capacity, such that the information amount of the encoded recording information is less than the detected recordable capacity.

According to the present invention, during encoding, a received program is encoded such that it is less than a recordable capacity on the recording medium, so it is possible to transfer and record the entire desired program onto the recording medium.

In another aspect of the present invention can be achieved by the information-recording apparatus of the present invention. The information-recording apparatus of the present invention is, wherein the obtaining device obtains the recording time by obtaining the recording start time and recording end time of the obtained recording information; and the encoding device encodes the obtained recording information based on the obtained record time and the detected recordable capacity such that the information amount of the encoded recording information is less than the detected recordable capacity.

According to the present invention, the recording time is set using the broadcast start time and the broadcast end time of the program to be recorded, so it is possible to easily set the encoding rate for the program,

In further aspect of the present invention can be achieved by the information-recording apparatus of the present invention. The information-recording apparatus of the present invention is, wherein the detection device is an input device used for entering the recordable capacity.

According to the present invention, it is possible for the user to use the input unit and enter the recording capacity directly, so it is possible to set the recording capacity with a higher level of freedom.

In further aspect of the present invention can be achieved by the information-recording apparatus of the present invention. The information-recording apparatus of the present invention is, wherein the detection device is an input device used for entering the ratio of the recordable capacity with respect to the enter recording capacity of the recording medium.

According to the present invention, when setting the recording capacity by entering the percentage or ration of the recordable capacity with respect to the entire recording capacity of the recording medium to which the program is to be transferred and recorded, it is possible to enter the recording capacity more intuitively, so the recorder is very easy to use for the user.

In further aspect of the present invention can be achieved by the information-recording apparatus of the present invention. The information-recording apparatus of the present invention is further provided with an unrecorded-portion-detection device which detects the information amount of the unrecorded portion on the recording medium; and wherein the detection device detects the information amount detected by the unrecorded-portion-detection device as the recordable information amount

According to the present invention, the data amount of the unrecorded area on the actually mounted recording medium is detected and it is taken to be the recording capacity, so it is possible to easily set the recording capacity without being troublesome for the user.

In further aspect of the present invention can be achieved by the information-recording apparatus of the present invention. The information-recording apparatus of the present invention is, wherein when there is a plurality of the recording media that are capable of recording the recording information that is transferred from the temporary recording medium, the detection device detects the recording capacity of the portion on one of the recording media where the encoded information to be recorded as the recordable information amount.

According to the present invention, when setting the recording capacity using disc-management data that corresponds to a recording medium that is used in the information-recording apparatus, a recording medium that has been forgotten by the user can also become the object of selection, so the recorder becomes even easier to use.

In further aspect of the present invention can be achieved by the information-recording apparatus of the present invention. The information-recording apparatus of the present invention is further provided with: a memory device which stores the recording capacity of the portion on each of the recording media where the encoded information to be recorded as management information for each respective recording medium; and wherein the detection device reads from the memory device the recording capacity of the portion on one of the recording media where the encoded information to be recorded as the recordable information amount.

According to the present invention, when the two data-recording media of the recorder are both hard discs or both DVDs, the present invention can be applied to the case of transferring the program between them. Also, the present invention can be applied to the case in which at least one of these recording media is a solid-state memory such as a so-called semiconductor memory or magnetic memory. In other words, the invention can be applied to all kinds of recording media regardless of the kind (form) of recording media used in the recorder.

The above object of the present invention can be achieved by an information-recording method of the present invention. The information-recording method is provided with: an encoding process of obtaining recording information from the outside to be recorded onto a recording medium, and encoding the obtained information to correspond to the recording format of the recording information after being recording onto the recording medium; a recording process of temporarily recording the encoded recording information onto a temporary recording medium that is different from the recording medium; and a transfer/recording process of transferring and recording the recording information that is recorded on the temporary recording medium onto the recording medium while maintaining at least the information amount of the recording information.

According to the present invention, in the recording process of a recorder, an encoder unit performs encoding using an encoding rate that corresponds to a recording format such as a recording capacity after recording onto the recording medium, and after a program is temporarily recorded onto a hard disc, it is transferred and recorded as is onto the recording medium, so it is possible to prevent long transfer time and degradation of the video quality due to performing encoding and decoding again when transferring the program.

The above object of the present invention can be achieved by an information-recording program of the present invention. The information-recording program that makes a computer included in the an information-recording apparatus function as: an encoding device which obtains recording information from the outside to be recorded onto a recording medium, and encodes the obtained information to correspond to the recording format of the recording information after being recording onto the recording medium; a recording device which temporarily records the encoded recording information onto a temporary recording medium that is different from the recording medium; and a transfer/recording device which transfers and records the recording information that is recorded on the temporary recording medium onto the recording medium while maintaining at least the information amount of the recording information.

According to the present invention, in the recording process of a recorder, an encoder unit performs encoding using an encoding rate that corresponds to a recording format such as a recording capacity after recording onto the recording medium, and after a program is temporarily recorded onto a hard disc, it is transferred and recorded as is onto the recording medium, so it is possible to prevent long transfer time and degradation of the video quality due to performing encoding and decoding again when transferring the program.

### BRIEF DESCRIPTION OF THE DRAWINGS

FIG. 1 is a block diagram showing the main construction of the recorder of an embodiment of the present invention.
FIG. 2 is a flowchart showing the entire operation of an embodiment of the present invention.
FIG. 3 is a flowchart showing details of the operation of an embodiment of the present invention.

### DESCRIPTION OF THE PREFERRED EMBODIMENT

Next, the preferred embodiments of the invention will be explained based on the drawings.

The embodiments below are embodiments in which the present invention is applied to a recorder that temporarily records data of a broadcast program that was received by way of a broadcast signal onto a hard disc, and then transfers and records that data onto a DVD (Digital Versatile Disc).

### (I) Overall Construction and Operation

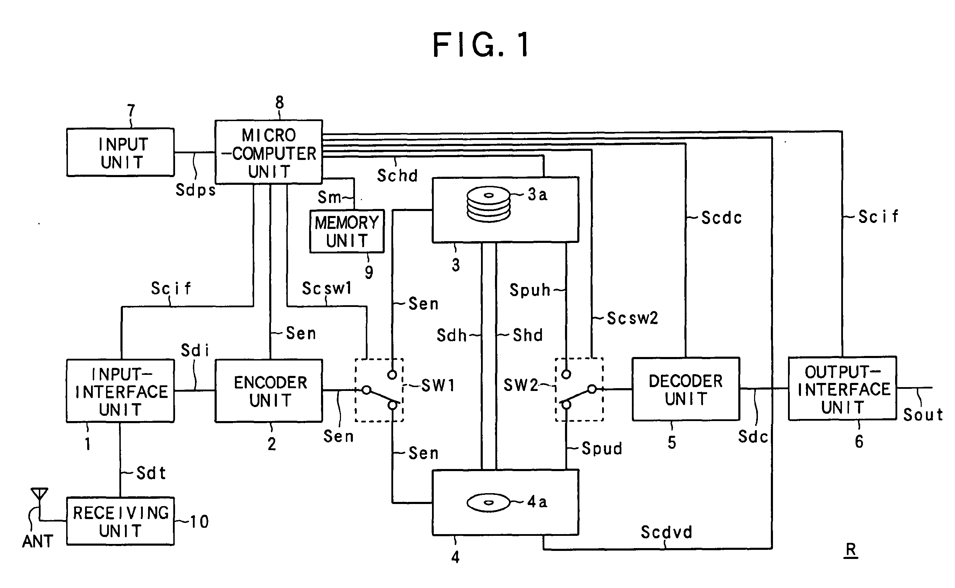

First, FIG. 1 will be used to explain the overall construction of the recorder that is the data-recording apparatus of this embodiment. FIG. 1 is a block diagram showing the main construction of an embodiment of the invention.

As shown in FIG. 1, the recorder R of this embodiment comprises: an input-interface unit 1; an encoder unit 2 as an encoding means; a HD drive apparatus that is capable of recording data onto and reproducing data from a hard disc 3a, which is an internal temporary recording medium; a DVD drive apparatus 4 that is capable of recording data onto and reproducing data from a DVD 4a, which is a mounted recording medium; a decoder unit 5; an output-interface unit 6; an input unit 7 as an input means; a microcomputer unit 8 as a recording means and transfer/recording means; a memory unit 9; and switches SW1 and SW2.

Next, the overall operation will be explained.

In the recorder R of this embodiment, data from a broadcast programthat is receivedbyway of abroadcast signal (hereafter the data will be referred to as the program) is received, and this data is recorded on either a hard disc 3a or DVD 4a, then the recorded program is detected from either the hard disc 3a or DVD 4a and reproduced, and can be output to a display or speakers (not shown in the figure).

First, the overall operation when recording the received program onto a hard disc 3a will be explained. When recording the received program onto a hard disc 3a, the switch SW1 switches to the HD drive apparatus 3 side according to a control signal Scsw1 from the microcomputer unit 8.

The broadcast signal that carries the program to be received is received by an antenna ANT, and after it is processed or demodulated by the receiving unit 10, it is output to the input-interface unit 1 as a received signal Sdt.

Next, according to a control signal Scif from the microcomputer unit 8, the input-interface unit 1 performs a preset input-interface process on the received signal Sdt and generates a processed received signal Sdi, and then outputs it to the encoder unit 2.

Next, according to a control signal Scen from the microcomputer unit 8, the encoder unit 2 performs an encoding process on the processed received signal Sdi in order to record it onto the hard disc 3a and generates an encoded signal Sen, and then outputs it to the HD drive apparatus 3 by way of the switch SW1 that is already switched to the HD drive apparatus 3 side.

Also, according to a control signal Schd from the microcomputer unit 8, the recording unit (not shown in the figure) inside the HD drive apparatus 3 records the encoded signal Sen onto the hard disc 3a, and in this way the received program is recorded onto the hard disc 3a.

Next, the overall operation in the case of recording the received program onto a DVD 4a will be explained. When recording the received program onto the DVD 4a, the switch SW1 is switched to the DVD drive apparatus 4 side according to a control signal Scsw1 from the microcomputer unit 8.

When recording the received program onto the DVD 4a, first, processing similar to that performed when recording the received program onto the hard disc 3a is performed by the receiving unit 10, input-interface unit 1 and encoder unit 2, and the generated encoded signal Sen is output to the DVD drive apparatus by way of the switch SW1 that is already switched to the DVD drive apparatus 4 side.

Also, according to a control signal Scdvd from the microcomputer unit 8, the recording unit (not shown in the figure) inside the DVD drive apparatus 4 records the received program onto the DVD 4a.

Next, the overall operation when reproducing and outputting the data recorded on the hard disc 3a will be explained. When reproducing the recorded data, the switch SW2 is switched to the HD drive apparatus side 3 according to a control signal Scsw2 from the microcomputer unit 8.

When reproducing and outputting the data recorded on the hard disc 3a, first, according to a control signal Schd from the HD drive apparatus, the reproduction unit (not shown in the figure) inside the HD drive apparatus 3 detects the data recorded on the hard disc 3a, and generates a detected signal Spuh, then outputs it to the decoder unit 5 by way of the switch SW2 that is already switched to the HD drive apparatus.

Also, according to a control signal Scdc from the microcomputer unit 8, the decoder unit 5 decodes the detected signal Spuh and generates a decoded signal Sdc, and then outputs it to the output-interface unit 6.

Next, according to a control signal Scif from the microcomputer unit 8, the output-interface unit 6 performs a preset output-interface process on the decoded signal Sdc and generates an output signal Sout, and then outputs it to a display or speakers (not shown in the figure). In this way, the video, audio or the like of the data recorded on the hard disc 3a are reproduced.

Finally, the overall operation when reproducing and outputting the data recorded on the DVD 4a will be explained. When reproducing the recorded data, the switch SW2 is switched to the DVD drive apparatus 4 side according to a control signal Scsw2 from the microcomputer unit 8.

When reproducing and outputting the data recorded on the DVD 4a, first, according to a control signal Scdvd from the microcomputer unit 8, the reproduction unit (not shown in the figure) inside the DVD drive apparatus 4 detects the data recorded on the DVD 4a and generates a detected signal Spud, and then outputs it to the decoder unit 5 by way of the switch SW2 that is already switched to the DVD drive apparatus 4 side.

Next, the decoder unit 5 and output-interface unit 6 respectively perform a decoding process and output-interface process that are the same as the processes performed when reproducing the data recorded on the hard disc 3a described above to generate an output signal Sout, and then output it to a display or speakers (not shown in the figure). In this way, the video, audio or the like of the data recorded on the DVD 4a are reproduced.

Here, the controls for controlling the overall operations described above are executed using the input unit 7 comprising a button-control unit or remote-control unit, and control signals Sops corresponding to these controls are output from the input unit 7 to the microcomputer unit 8.

Also, according to this control signal Sops, the microcomputer unit 8 generates control signals Scsw1, Scif, Scen, Schd, Scdvd, Scsw2, Schd and Scdc for controlling the components of the recorder 7 and outputs them to the respective component in order to execute the operations corresponding to the controls executed from the input unit 7. Also, data necessary for the processing by the microcomputer unit 8 is output to the memory unit 9 as a memory signal Sm and stored temporarily, and when it is needed, it is read from the memory unit 9 as a memory signal Sm again and provided for processing by the microcomputer unit 8.

When transferring data from the hard disc 3a to the DVD 4a in the recording process of the present invention described below, the data is output from the HD drive apparatus 3 to the DVD drive apparatus 4 as a transfer signal Shd according to the aforementioned control signals Schd and Scdvd. Similarly, when transferring data from the DVD 4a to the hard disc 3a, the data is output from the DVD drive apparatus 4 to the HD drive apparatus 3 as a transfer signal Sdh according to the aforementioned control signals Schd and Scdvd.

### (II) Embodiment of the Present Invention

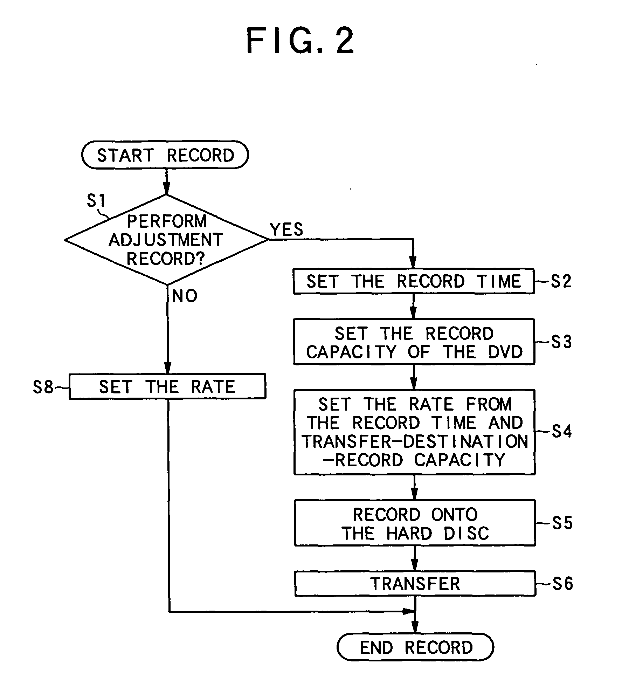

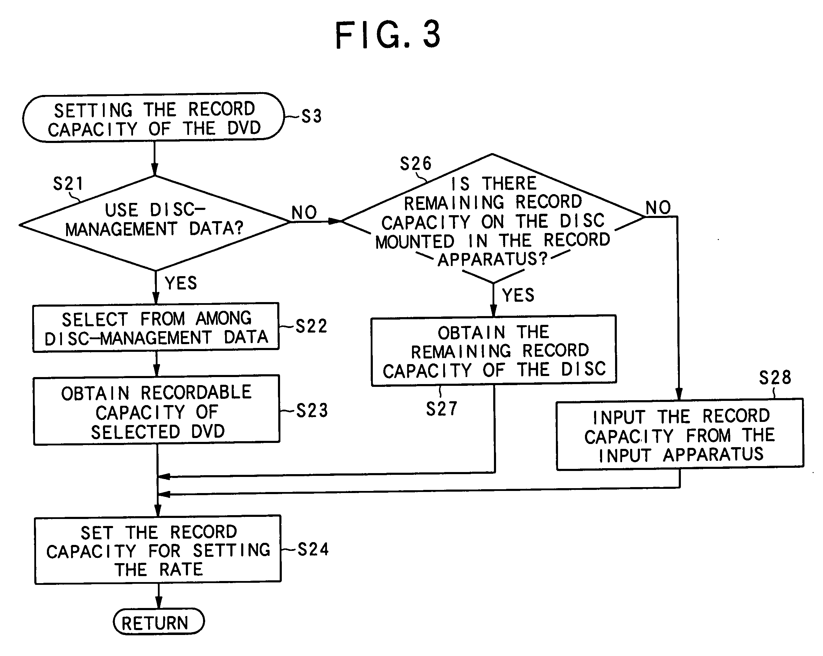

Next, FIG. 1 to FIG. 3 will be used to explain the data recording process of this embodiment. FIG. 2 is a flowchart showing the overall recording process of the embodiment, and FIG. 3 is a flowchart showing that process in detail.

The embodiment described below is an embodiment in which a broadcast program is received and temporarily recorded on a hard disc 3a, after which it is transferred to a DVD 4a and recorded.

As shown in FIG. 2, in the recording process of this invention, first, the channel and recording time for the desired program are specified using the input unit 7. Also, a prompt is displayed on a display unit (not shown in the figures) or the like asking whether or not to perform recording to fit the recordable capacity of the DVD 4a, or in other words, whether or not to estimate beforehand the recording capacity when transferring and recording the recorded data onto the DVD 4a, and then to record the data onto the hard disc 3a (hereafter, this recording method will be called adjusted recording) (step S1).

When adjusted recording is not to be performed (Step S1: NO), then regardless of the recording capacity on the DVD 4a, the user uses the input unit 7 to set a desired recording rate taking into consideration the reproduction quality after recording, and then the received program is recorded onto the hard disc 3a using that set recording rate (step S8), and the series of recording processes ends.

On the other hand, in the judgment of step S1, when adj usted recording is to be performed (step S1: YES), then next the user uses the input unit 7 to set the recording time (in the case of a television broadcast, this is normally the same as the broadcast time) of the program desired to be received and recorded. Here, as a more specific examples of entering this recording time, the recording time can be input by entering the broadcast start time and the broadcast end time of the program to be recorded, or the recording time can be input by entering the broadcast start time and broadcast time of the program to be recorded.

After the recording time of the program has been set, next the recording capacity assigned for finally recording that program on the DVD 4a is set using the input unit 7 (step S3). Here, in step S3, the recording capacity when finally transferring and recording the program onto the DVD 4a after recording it temporarily onto the hard disc 3a is input using the input unit 7 by a process that will be described later.

Also, based on the recording time input in step S2 and the recording capacity input in step S3, the microcomputer unit 8 sets the encoding rate for the encoder unit 2 such that the program having that recording time is finally encoded to data having that recording capacity, and records it temporarily in the memory unit 9 (step S4). Here, as one example of the method for setting the encoding rate, the value obtained by dividing the recording capacity that was input in step S3 by the recording time that was input in step S2 is set as the encoding rate. Basically, this set encoding rate is the same as the transfer rate when transferring the program from the hard disc 3a to the DVD 4a as will be described later.

After that, the encoder unit 2 starts receiving the desired program and uses the set encoding rate to encode the processed-received signal Sdi that corresponds to the received program, and outputs the result to the HD drive apparatus 3 by way of switch SW1 as an encoded signal Sen.

Then the HD drive apparatus 3 records the encoded signal Sen onto the hard disc 3a (step S5). In this way, the received program is temporarily recorded onto the hard disc 3a.

Next, after preparation to record the program onto the DVD 4a is completed by mounting the DVD 4a into the DVD drive apparatus 4, a conversion process is performed to convert the program that was temporarily recorded on the hard disc 3a (see step S5) to the recording format necessary for recording it onto the DVD 4a while maintaining its recording capacity, after which it is transferred from the HD drive apparatus 3 to the DVD drive apparatus 4 as a transfer signal Shd (step S6) , and furthermore, the DVD drive apparatus 4 records the transferred program onto the DVD 4a such that it has the recording capacity set in step S3, and then the series of recording processes of this embodiment ends. In the transfer process of steps S6, it is not necessary to perform encoding and decoding again in order to adjust the recording capacity (due to degradation of the video quality), and by transferring the program with the recording capacity as is on the hard disc 3a (or in other words, the desired recording capacity on the DVD 4a) it is possible to execute the recording process of recording the program onto the DVD 4a as is.

Next, FIG. 3 will be used to explain in detail the process of setting the recording capacity of the program in step S3.

In the setting process for setting the recording capacity in step S3, first, the display unit (not shown in the figure) is used to have the user confirm whether or not to use disc-management data to determine whether or not to set the recording capacity (step S21).

Here, the disc-management data is attribute data for identifying individual DVDs 4a from among a plurality of DVDs 4a when the DVD drive apparatus 4 has been used in the past to recorded data on a plurality of DVDs 4a.

More specifically, data, such as the title, recorded capacity and un-recorded capacity of each DVD 4a, is recorded beforehand in the memory unit 9 or on the hard disc 3a as disc-management data.

Also, in the judgment of step S21, when it is determined that the disc-management data will be used to set the recording capacity due to some reason such as the DVD 4a not being mounted in the DVD drive apparatus 4 yet (step S21: YES), then next, disc-management data corresponding to the DVD 4a on which the received program is to be recorded is selected from among the plurality of recorded disc-management data (step S22), and furthermore, the recordable capacity on the DVD 4a that corresponds to that recorded disc-management data (more specifically, in the case of a recordable type DVD 4a, this is the data amount of the unrecorded area, and in the case of a rewritable type DVD 4a, this is a data amount that is less than the entire recording capacity of the DVD 4a) is obtained from that disc-management data (step S23), and that obtained recordable capacity is set in the microcomputer unit 8 as the recording capacity that is used in the process of step S4 (step S24), and the process then moves to step S4.

On the other hand, in the judgment of step S21, when it is determined not to set the recording amount using the disc-management data (step S21: NO), the user confirms whether or not to use the data amount of the unrecorded area on the DVD 4a that is actually mounted in the DVD drive apparatus 4 as the recording capacity used when setting the encoding rate in step S4 (step S26).

Also, when the data amount of the unrecorded area is to be used as the recording capacity for setting the encoding rate (step S26: YES), that data amount is actually detected from the mounted DVD 4a and set in the microcomputer unit 8 as the recording capacity that is used in the process of step S4 (step S24), and the process moves to the process of step S4.

However, in the judgment of step S26, when the data amount of the unrecorded area on the DVD 4a that is actually mounted is not to be used as the recording capacity for setting the encoding rate (steps S26: NO), the display unit (not shown in the figures) is used to notify that the user must directly enter the recording capacity, and the process waits for that input, and after that recording capacity has been entered (step S28), that input recording capacity is set in the microcomputer unit 8 as the recording capacity to be used in the process of step S4 (step S24), and the process moves to step S4. Here, the method of entering the recording capacity can be such that the recording capacity is entered directly as a numerical value, or can be such that the amount is entered as a percentage of the entire recording capacity of the DVD 4a to which the program is to be transferred and recorded.

The process of reproducing from the DVD 4a the program that was transferred to and recorded on the DVD 4a is exactly the same as the reproduction process in the overall processing describedabove, so a detailed explanation of it will be omitted here.

As was explained above, in the recording process of the recorder R of this embodiment, the encoder unit 2 performs encoding using an encoding rate that corresponds to the recording format such as the recording capacity after recording onto the DVD 4a, and after the program is temporarily recorded onto the hard disc 3a, it is transferred and recorded as is onto the DVD 4a, so it is possible to prevent long transfer time and degradation of the video quality due to performing encoding and decoding again when transferring the program.

Also, during encoding, the received program is encoded such that it is less than the recordable capacity on the DVD 4a, so it is possible to transfer and record the entire desired program onto the DVD 4a.

Furthermore, the recording time is set using the broadcast start time and the broadcast end time of the program to be recorded, so it is possible to easily set the encoding rate for the program,

Also, it is possible for the user to use the input unit 7 and enter the recording capacity directly, so it is possible to set the recording capacity with a higher level of freedom.

Moreover, when setting the recording capacity by entering the percentage of the recordable capacity with respect to the entire recording capacity of the DVD 4a to which the program is to be transferred and recorded, it is possible to enter the recording capacity more intuitively, so the recorder R is very easy to use for the user.

Furthermore, the data amount of the unrecorded area on the actually mounted DVD 4a is detected and it is taken to be the recording capacity, so it is possible to easily set the recording capacity without being troublesome for the user.

When setting the recording capacity using disc-management data that corresponds to a DVD 4a that is used in the DVD drive apparatus 4, a DVD 4a that has been forgotten by the user can also become the object of selection, so the recorder R becomes even easier to use.

In the embodiment described above, the case in which a program that is temporarily recorded on a hard disc 3a is transferred and recorded onto a DVD 4a was explained, however, besides this, the invention could also be applied to the case in which a program that is temporarily recorded on a DVD 4a is transferred and recorded onto a hard disc 3a. In this case, in the transfer process of step S6 in FIG. 2, a conversion process is performed to convert the program recorded temporarily on the DVD 4a to the recording format necessary for recording the program onto the hard disc 3a while at least maintaining the recording capacity as is, and then the program is transferred from the DVD drive apparatus 4 to the HD drive apparatus 3 as a transfer signal Sdh (step S6), and then the HD drive apparatus 3 records the transferred program onto the hard disc HD 3a and the series of recording processes of this embodiment is complete.

Furthermore, when the two data-recording media of the recorder R are both hard discs 3a or both DVDs 4a, the invention can be applied to the case of transferring the program between them. Also, the invention can be applied to the case in which at least one of these recording media is a solid-state memory such as a so-called semiconductor memory or magnetic memory. In other words, the invention can be applied to all kinds of recording media regardless of the kind (form) of recording media used in the recorder R.

By recording programs corresponding to the flowcharts shown in FIG. 2 and FIG. 3 on a data-recording medium such as a flexible disc, or by obtaining these programs via a network such as the Internet and recording them, and then reading and executing these programs by a general-purpose microcomputer or the like, it is possible to use that general-purpose microcomputer as the microcomputer unit 2 of the this embodiment.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. An information-recording apparatus (R) **characterized in that** the information-recording apparatus comprises:
an encoding device (2) which obtains recording information from the outside to be recorded onto a recording medium, and encoding said obtained information to correspond to the recording format of said recording information after being recording onto said recording medium;
a recording device (3) which temporarily records said encoded recording information onto a temporary recording medium (3a) that is different from said recording medium (4a) ; and
a transfer/recording (4,8) device which transfers and records said recording information that is recorded on said temporary recording medium onto said recording medium while maintaining at least the information amount of said recording information.

2. The information-recording apparatus (R) according to claim 1 further comprises:
an obtaining device (8) which obtains at least the recording time or information amount of said obtained recording information before encoding; and
a detection device (8) which detects the recordable capacity on said recording medium; and wherein
said encoding device encodes said obtained recording information based on at least the recording time or information amount of said obtained recording information, and said detected recordable capacity, such that the information amount of said encoded recording information is less than said detected recordable capacity.

3. The information-recording apparatus according to claim 2, wherein
said obtaining device obtains said recording time by obtaining the recording start time and recording end time of said obtained recording information; and
said encoding device encodes said obtained recording information based on said obtained record time and said detected recordable capacity such that the information amount of said encoded recording information is less than said detected recordable capacity.

4. The information-recording apparatus according to claim 2 or 3, wherein
said detection device is an input device used for entering said recordable capacity.

5. The information-recording apparatus according to claim 2 or 3, wherein
said detection device is an input device used for entering the ratio of said recordable capacity with respect to the enter recording capacity of said recording medium.

6. The information-recording apparatus according to claim 2 or 3 further comprising
an unrecorded-portion-detection device (8) which detects the information amount of the unrecorded portion on said recording medium; and wherein
said detection device detects the information amount detected by said unrecorded-portion-detection device as said recordable information amount

7. The information-recording apparatus according to claim 2 or 3, wherein
when there is a plurality of said recording media that are capable of recording said recording information that is transferred from said temporary recording medium,
said detection device detects the recording capacity of the portion on one of said recording media where said encoded information to be recorded as said recordable information amount.

8. The information-recording apparatus according to claim 7 further comprising:
a memory device (9) which stores the recording capacity of the portion on each of said recording media where said encoded information to be recorded as management information for each respective recording medium; and wherein
said detection device reads from said memory device the recording capacity of the portion on one of said recording media where said encoded information to be recorded as said recordable information amount.

9. An information-recording method **characterized in that** the information-recording method comprises:
an encoding process of obtaining recording information from the outside to be recorded onto a recording medium, and encoding said obtained information to correspond to the recording format of said recording information after being recording onto said recording medium;
a recording process of temporarily recording said encoded recording information onto a temporary recording medium that is different from said recording medium; and
a transfer/recording process of transferring and recording said recording information that is recorded on said temporary recording medium onto said recording medium while maintaining at least the information amount of said recording information.

10. An information-recording medium in which a information-recording program is recorded in a readable way by a recording computer included in a information-recording apparatus which, **characterized in that** the information-recording program causing the recording computer to function as:
an encoding device which obtains recording information from the outside to be recorded onto a recording medium, and encodes said obtained information to correspond to the recording format of said recording information after being recording onto said recording medium;
a recording device which temporarily records said encoded recording information onto a temporary recording medium that is different from said recording medium; and
a transfer/recording device which transfers and records said recording information that is recorded on said temporary recording medium onto said recording medium while maintaining at least the information amount of said recording information.
